# DEMANDE DE BREVET EUROPEEN

(11) **EP 2 174 705 A1**
(43) Date de publication de la demande: **14.04.2010**
(21) Numéro de dépôt: 09290692.4
(22) Date de dépôt: 11.09.2009
(51) Int. Cl.: B01J 8/02, B01J 8/06, F28D 7/10, C01B 3/38

(54) **Enceinte réactionnelle favorisant l'echange de chaleur entre les réactifs et les gaz produits**

(30) Priorité: 07.10.2008 FR 0805537; 20.10.2008 FR 0805800
(71) Demandeur: IFP, 92852 Rueil-Malmaison Cédex (FR)
(72) Inventeur: Boyer, Christophe, 69390 Charly (FR); Giroudiere, Fabrice, 69530 Orlienas (FR)

(57) **Abrégé**

La présente invention concerne une enceinte dans laquelle s'effectue une réaction chimique en présence de catalyseur et de réactifs, comportant au moins un tube catalytique (10) dans lequel est disposé un tube interne d'évacuation (12) du gaz produit, des moyens d'introduction des réactifs (15) et des moyens d'introduction du catalyseur (16) situés dans la partie supérieure de l'enceinte (1), des moyens de chauffage du tube catalytique (10) disposés dans la partie inférieure de l'enceinte (1), et dans laquelle le tube catalytique (10) comporte dans sa partie supérieure au dessus du catalyseur (13) des moyens favorisant l'échange de chaleur entre les réactifs et le gaz produit.

L'invention concerne également le procédé mettant en oeuvre cette enceinte.

## Description

La présente invention concerne le domaine de la production de gaz de synthèse formé d'un mélange d'hydrogène de monoxyde de carbone, de dioxyde de carbone et d'eau, et plus particulièrement un dispositif de type réacteur-échangeur permettant la production de ce gaz de synthèse par vaporeformage.

Le vaporeformage est un procédé de production d'hydrogène en présence de vapeur d'eau et de chaleur. C'est le procédé qui est aujourd'hui le plus utilisé au niveau industriel. Ce procédé a lieu en général dans un réacteur en présence de catalyseur et/ou de brûleurs. L'énergie nécessaire à la réaction endothermique de vaporeformage doit être fournie par transfert thermique au milieu réactionnel catalytique. Le gaz de synthèse doit généralement être produit en pression de façon à permettre sa purification dans des étapes en aval sans avoir à le re-comprimer.

Lors de la production d'hydrogène par vaporeformage, le rendement de production d'hydrogène et de conversion de la charge utilisée dépend de l'équilibre thermodynamique de la réaction de vaporeformage qui est directement fonction de la température de sortie du catalyseur. Typiquement, la température permettant de maximiser le rendement varie entre 750°C pour de l'éthanol et 900°C pour du méthane. A ces niveaux de température, les pertes thermiques sont très élevées, il est donc important de les minimiser. Par ailleurs, les réactifs étant en pression et à des températures très élevées, les contraintes sur les matériaux sont très importantes. Il est très difficile voire impossible de faire des entrées ou sorties de réacteur sous pression au-delà de certaines températures. Par exemple l'apport extérieur de fumées très chaudes ne peut se faire par un piquage standard car les fumées sont typiquement au-delà de 1000°C. Une autre contrainte dont il est nécessaire de tenir compte est la tenue des matériaux dans des conditions de forts risques de corrosion (également appelé métal dusting dans la terminologie anglo-saxonne), qui se produit en atmosphère carburante (présence CO, CO₂) surtout lorsque les températures sont comprises entre 600°C et 800°C.

Il est déjà connu des systèmes permettant de tenir compte de certaines de ces contraintes. On peut citer notamment le brevet US 4 861 348 qui propose un réacteur échangeur de type baïonnette pour des réactions catalytiques dans lequel le catalyseur est inséré entre deux tubes concentriques et chauffé par l'écoulement des fumées issues d'un brûleur situé en partie inférieure du réacteur. Un système de conduits périphériques permet de préchauffer l'air de combustion par écoulement à contre-courant avec les fumées du brûleur et d'aménager ainsi des parois froides en périphérie du réacteur.

On peut citer également la demande de brevet déposée auprès de l'INPI le 20 juillet 2007 sous le numéro 07/05-316FR qui décrit un réacteur de vaporeformage à tube baïonnette permettant de fonctionner avec des différences de pression de l'ordre de 10 MPa entre le coté tube et le coté calandre.

Un inconvénient de ces dispositifs est qu'ils ne comportent pas de système pour préchauffer le gaz à convertir avant la zone réactionnelle et limiter la température de sortie du gaz produite par la réaction. Un autre inconvénient est que le gaz de synthèse est évacué à une température peu compatible avec le design d'un équipement sous pression. Un autre inconvénient est d'évacuer du gaz à des conditions de température pour lesquelles il favorise des phénomènes de corrosions incompatible avec la plupart des aciers inox standard.

La présente invention a donc pour objet de palier un ou plusieurs des inconvénients de l'art antérieur en proposant un réacteur-échangeur de vaporeformage permettant d'amener les réactifs et le gaz de synthèse à une température compatible avec le dispositif et limitant ainsi les pertes thermiques, en favorisant l'échange de chaleur entre les réactifs et les gaz produits.

Pour cela la présente invention propose une enceinte dans laquelle s'effectue une réaction chimique en présence de catalyseur et de réactifs, comportant :
- au moins un tube catalytique dans lequel est disposé un tube interne d'évacuation du gaz produit, en relation avec l'extérieur, le catalyseur étant disposé entre le tube interne d'évacuation et la surface interne du tube catalytique,
- des moyens d'introduction des réactifs situés dans la partie supérieure de l'enceinte,
- des moyens d'introduction du catalyseur situés dans la partie supérieure de l'enceinte,
- des moyens de chauffage du tube catalytique disposés dans la partie inférieure de l'enceinte,
   et dans laquelle le tube catalytique comporte dans sa partie supérieure au dessus du catalyseur des moyens favorisant l'échange de chaleur entre les réactifs et le gaz produit.

Dans un mode de réalisation de l'invention les moyens favorisant l'échange de chaleur entre les réactifs et le gaz produit sont constitués d'un tube de réduction de passage disposé contre la surface interne du tube catalytique de façon a laisser un passage pour les réactifs entre le tube de réduction de passage et le tube interne d'évacuation.

Selon un mode de réalisation de l'invention l'épaisseur du tube de réduction de passage est définie de façon à ce que la surface de sa paroi interne soit disposée à une distance comprise entre 1 mm et 40 mm de la surface externe du tube interne d'évacuation.

Dans un mode de réalisation de l'invention le tube de réduction de passage comporte un canal reliant les moyens d'introduction du catalyseur et la zone du tube catalytique où est disposé le catalyseur.

Selon un mode de réalisation de l'invention les moyens de chauffage sont constitués d'une chambre de combustion comportant à sa base un tube injecteur de l'air et d'un gaz inflammable, un interne disposé dans le tube injecteur au niveau de la jonction avec la chambre, un brise-jet disposé dans la chambre au dessus de l'interne, une grille de distribution du mélange air/gaz disposée au dessus du brise-jet, un matériau poreux disposé au dessus de la grille de distribution et une deuxième grille au dessus du matériau poreux pour initier la combustion.

Dans un mode de réalisation de l'invention la grille de distribution a une porosité de 30%.

Dans un autre mode de réalisation de l'invention le matériau poreux est un monolithe en cordiérite de 400 cpsi.

Selon un mode de réalisation de l'invention le tube catalytique est disposé dans un tube supplémentaire, la distance entre la surface externe du tube catalytique et le tube supplémentaire est comprise entre 1 mm et 40 mm.

Dans un mode de réalisation de l'invention un matériau de type calorifuge est disposé entre le tube supplémentaire et la paroi de l'enceinte.

Selon un mode de réalisation de l'invention l'enceinte a un diamètre compris entre 50 mm et 10 m.

L'invention concerne également le procédé de vaporeformage mettant en oeuvre le dispositif décrit ci-dessus en tant que réacteur-échangeur pour réaliser une réaction de vaporeformage.

Selon un mode de réalisation de l'invention le gaz de synthèse est évacué à une température inférieure à 600°C.

Selon un mode de réalisation de l'invention les réactifs sont préchauffés à une température supérieure à 350°C.

D'autres caractéristiques et avantages de l'invention seront mieux compris et apparaîtront plus clairement à la lecture de la description faite, ci-après, en se référant à aux figures annexées et données à titre d'exemple:

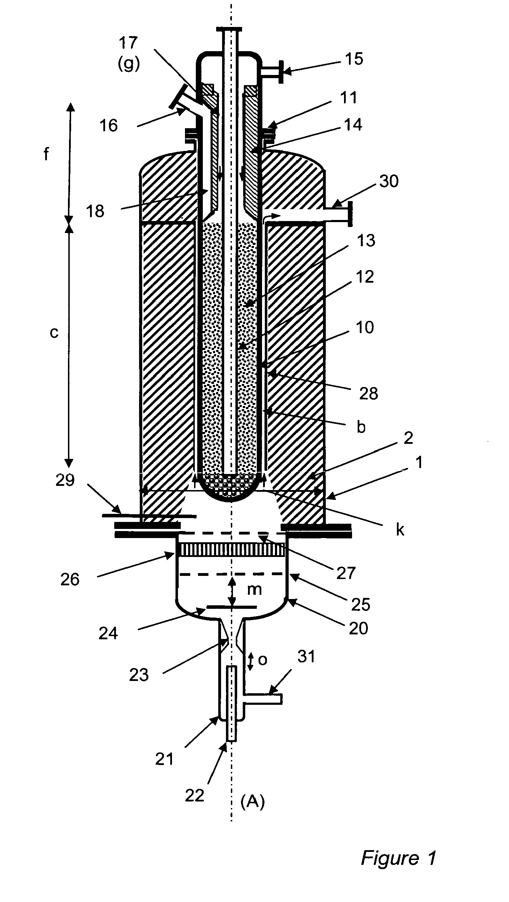

- la figure 1 représente une vue schématique de l'enceinte selon l'invention,
- la figure 2 représente les résultats d'une simulation numérique de l'écoulement gaz combustible/air dans la chambre de combustion du dispositif selon l'invention 2a) contours de vitesses dans la chambre de combustion 2b) contours de concentration en méthane dans la chambre de combustion.

Le dispositif selon l'invention illustré sur la figure est composé d'une enceinte (1) dans laquelle est inséré, par la partie supérieure, un tube ou plusieurs catalytique (10). Ce tube ou ces tubes peuvent être maintenus à la paroi supérieure de l'enceinte grâce à un système de brides (11), ou tout autre système du même type bien connu de l'homme du métier, pour permettre sont démontage. L'enceinte est en général de forme cylindrique allongée et son diamètre est en général compris entre 100 mm et 10 m, et de préférence entre 300 mm et 2 m. Le diamètre de l'enceinte est déterminé, dans les limites données ci-dessus, en fonction du nombre de tubes catalytiques que l'on souhaite mettre en oeuvre et en fonction de la taille des tubes utilisés. Dans un autre mode de réalisation c'est le nombre de tubes (10) qui est déterminé en fonction de la taille de l'enceinte (1). Le ou les tubes catalytiques (10) sont disposés le long de l'axe longitudinal (A) de l'enceinte (1). Le diamètre externe de ces tubes (10) est en général compris entre 20 mm et 200 mm, et de préférence entre 30 mm et 100 mm. Le diamètre interne du tube catalytique (10) est facilement déductible pour l'homme du métier sachant que la distance annulaire de la zone catalytique est en général comprise entre 5 mm et 40 mm, et de préférence entre 8 mm et 50 mm. De façon générale, l'enceinte (1) selon l'invention comporte au moins un tube catalytique (10). Selon une variante de l'invention, l'enceinte (1) peut comporter entre un et plusieurs tubes catalytiques (10). Le nombre de tube catalytique disposés dans l'enceinte étant en général défini en fonction de la taille des tubes utilisés et de la taille de l'enceinte (1), ce nombre peut, par exemple, être compris entre 1 et 50000 tubes, de préférence entre 1 et 1000 tubes, et de façon très préférée entre 1 et 300 tubes.

L'intérieur du ou des tubes catalytiques est disposé un tube interne d'évacuation (12) concentrique qui permet d'évacuer le gaz produit par la réaction catalytique. Le diamètre externe de ce tube d'évacuation (12) est en général compris entre 5 mm et 50 mm, et de préférence entre 10 mm et 20 mm. Le diamètre interne de ce tube d'évacuation (12) est en général compris entre 3 mm et 40 mm, et de préférence entre 8 mm et 15 mm. Le catalyseur (13) nécessaire pour la réaction de vaporéformage est disposé dans l'espace annulaire entre la paroi du tube d'évacuation (12) et la paroi du tube catalytique (10). Le tube d'évacuation (12) est utilisé pour évacuer le gaz produit par la réaction, aussi appelé gaz de synthèse, en sortie du lit catalytique. Ce gaz de synthèse chaud circule donc à contre-courant des réactifs, qui sont l'eau et le réactif de type hydrocarbure ou alcool, dans le lit catalytique. Ainsi une partie de l'enthalpie nécessaire à la réaction est fournie par le gaz de synthèse qui se refroidi le long du tube d'évacuation (12).

Le catalyseur utilisé dans le cadre de l'invention peut être constitué de grains de formes diverses (sphères, cylindres pleins ou usinés..) ou de monolithes dans lesquels sont usinés des canaux de petits diamètres. Les réactifs sont introduits dans le tube catalytique (10) grâce à la conduite (15). Cette conduite peut être disposée orthogonalement à la paroi du tube (10) ou de façon tangentielle pour donner un mouvement de rotation à l'écoulement à l'entrée du tube catalytique (10) et favoriser ainsi la distribution de l'écoulement sur toute la section annulaire où est situé le catalyseur (13).

Le dispositif selon l'invention comporte dans sa partie supérieure des moyens de préchauffage des réactifs et de refroidissement du gaz de synthèse produit. Ces moyens permettant un échange de chaleur entre les réactifs et le gaz de synthèse sont formés par un tube de réduction de passage (14) inséré dans la partie supérieure du tube catalytique (10) contre la paroi interne du tube catalytique (10) pour réduire la section de passage de l'écoulement des réactifs. Ce tube de réduction de passage (14) est cylindrique, et en général à une forme équivalente à celle de l'intérieur du tube catalytique (10) de façon à bien adhérer à la paroi interne du tube catalytique (10). Le tube de réduction de passage à une épaisseur définie de façon à ce que sa paroi interne soit disposée à une distance comprise en général entre 1 mm et 40 mm de la surface externe du tube interne d'évacuation (12), de préférence entre 1,5 mm et 20 mm, et de manière très préférée est égale à 2 mm. Le matériau utilisé est bien connu de l'homme du métier et permet au tube de réduction de passage (14) de résister à la température et gaz circulants. En général le calcul de l'épaisseur du tube de réduction de passage (14) se fait par rapport à la valeur du diamètre (ou rayon) externe du tube d'évacuation (12) et du diamètre (ou rayon) interne du tube catalytique (10). Par exemple pour un tube catalytique avec un diamètre interne de 35,1 mm et un tube d'évacuation (12) avec un diamètre externe de 13,7 mm, l'épaisseur du tube de réduction de passage (14) est comprise entre 2 mm et 8 mm, de préférence entre 6 mm et 8 mm. Dans cette partie du tube catalytique (10) où est introduit le tube de réduction de passage (14) il n'y a pas de catalyseur. Cette réduction de la section de passage (17) a pour objectif d'accélérer les vitesses de l'écoulement des réactifs et intensifier ainsi le transfert de chaleur entre le gaz de synthèse et l'écoulement des réactifs. De cette façon, les réactifs sont préchauffés jusqu'à la température de démarrage de la réaction de façon optimisée puisque les pertes thermiques sont minimisées entre la zone de préchauffe et la zone réactionnelle. De plus de cette façon le gaz de synthèse est évacué de l'enceinte à une température modérée : inférieure à 600°C et de préférence inférieure à 400°C. Ainsi il est possible de confiner la zone de corrosion due à la composition du gaz de synthèse (H₂, CO, CO₂) dans le réacteur et limiter l'utilisation d'aciers spéciaux résistant à cette corrosion au seul tube d'évacuation (12).

Pour l'introduction du catalyseur, le dispositif comporte un tube d'arrivée (16) situé sur la paroi externe du tube catalytique (10) avec un angle compris en général entre 30° et 60° par rapport à l'axe longitudinal (A) du dispositif pour faciliter l'écoulement du catalyseur. Le catalyseur peut ensuite s'écouler au travers de la section de passage (17) si la partie supérieure du tube catalytique (10) possède un système de brides démontables et si son diamètre est suffisant ou s'écouler via un canal (18) usiné dans le tube de réduction de passage (14). De cette façon il est possible de charger le catalyseur une fois le tube d'évacuation (12) et le tube de réduction de passage (14) installés. Pour le déchargement du catalyseur, il est possible d'envisager le démontage du tube d'évacuation (12) par un système de bride ou d'utiliser le passage (18).

En partie basse de l'enceinte du réacteur est disposé un brûleur qui peut faire partie intégrante de l'enceinte (1) où être maintenu par un système de brides pour faciliter son démontage. Ce brûleur est composé d'une chambre (20) de combustion pour le mélange et la distribution de l'écoulement d'air et du gaz inflammable. A la base de cette chambre est situé un tube injecteur (21). L'air est injecté par un conduit (31) orthogonal ou tangentiel au tube injecteur (21) et le gaz inflammable est injecté par un tube concentrique (22). Un interne (23) composé d'un convergent et d'un divergent est ajouté en partie supérieure du tube injecteur (21) pour favoriser le mélange air/gaz inflammable. Dans la chambre (20) une plaque brise-jet (24) et une grille de distribution (25) sont disposées l'une au dessus de l'autre pour favoriser la distribution du mélange air/gaz inflammable sur toute la section de la chambre (20). La plaque brise-jet (24) est disposée au dessus de l'arrivée du tube injecteur (21) et la grille de distribution (25) est donc disposée au dessus de la plaque brise-jet (24). Un tronçon de matériau poreux (26) ou de type monolithe est ajouté au dessus de la grille de distribution (25) dans la chambre (20) pour éliminer les risques de retournement de flammes vers l'amont du brûleur. Une deuxième grille (27) est disposée au dessus du matériau poreux pour initier la combustion et accrocher la flamme si une flamme se développe. Cette grille peut être enduite ou non d'un matériau catalytique ou non catalytique. Cette grille peut être également remplacée par un tronçon de monolithe catalytique. Cette grille peut également être disposée sous la forme d'un ou plusieurs tubes perforés de façon à développer plus de surface pour l'établissement de la flamme. La valeur de la surface de cette grille (27) est comprise en général entre la valeur de la surface de la section du tube catalytique (équivalente à pi/4 fois son diamètre externe au carré) et 10 fois la valeur de la surface de la section du tube catalytique (10), et de préférence 5 fois la valeur de la surface de la section du tube catalytique (10). La combustion peut être initiée grâce à une électrode (29) d'allumage traversant la base de l'enceinte (1). Les fumées issues de la combustion sont ensuite canalisées entre le tube catalytique (10) et un tube supplémentaire (28). L'espace entre ces deux tubes (10, 28) est calculé de façon à optimiser le transfert thermique entre les fumées issues du brûleur et la zone catalytique. Cette distance tient compte des dimensions de l'enceinte (1), de la zone catalytique et de la chambre de combustion (20). Elle est comprise en général entre 1 mm et 40 mm, de préférence entre 1,5 mm et 20 mm et de manière très préférée est égal à 2,5 mm. Les pertes thermiques très importantes qui peuvent apparaître à ces niveaux thermiques très élevés (> 1000°C) sont réduites puisque la distance entre la zone de combustion et la zone d'échange est minimisée et un matériau (2) de type calorifuge est disposé entre le tube supplémentaire (28) et la paroi de l'enceinte (1). Les fumées sont ensuite évacuées en partie supérieure au travers d'un conduit (30) traversant l'enceinte (1). Un échangeur tubulaire en spirale peut être inséré autour de la partie supérieure du tube catalytique (10) pour vaporiser l'un des réactifs en utilisant les fumées refroidies avant leur évacuation. De cette façon on limite encore les pertes thermiques dans le système.

### Exemple de mode réalisation :

Un réacteur/échangeur de vaporéformage d'éthanol a été dimensionné avec la technologie décrite dans l'invention. L'objectif est d'effectuer la réaction de réformage d'un mélange éthanol/eau de débit 4,7 kg/h. Le volume de catalyseur est de 240 cc. La température souhaitée en sortie de la zone catalytique est de 750°C et la réaction doit démarrée au delà de 350°C en entrée de la zone catalytique. Le réacteur comporte un tube catalytique qui est chauffé par les fumées d'un brûleur catalytique alimenté par un gaz combustible contenant de l'hydrogène et du méthane (composition résumée dans le tableau 1). Le débit de gaz combustible est de 3,4 kg/h. La combustion étant catalysée, il est possible de fonctionner avec un large excès d'air. Le débit d'air est donc calculé pour obtenir une température des fumées de 1100°C en sortie du brûleur.

**Tableau 1 : Composition du gaz combustible**

| | |
|---|---|
| CH₄ (% mol) | 1,56 |
| H₂ (% mol) | 40,03 |
| H₂O (% mol) | 10,54 |
| CO₂ (% mol) | 47,87 |

Le diamètre (k) de l'enceinte (1) du réacteur est de 400 mm. Le diamètre extérieur (h) du tube catalytique (10) est de 42,2 mm et le diamètre intérieur (i) est de 35,1 mm. Le diamètre intérieur (j) du tube supplémentaire (28) est de 47,2 mm. L'épaisseur (b) de la veine de fumées autour du tube catalytique (10) pour intensifier le transfert thermique entre les fumées et le tube catalytique (10) est ainsi de 2,5 mm. La hauteur (c) de la zone catalytique est de 1200 mm et la distance de la zone annulaire catalytique est de 10,7 mm. Le diamètre interne du tube d'évacuation (12) du gaz de synthèse (e) est de 9,2 mm. La section échangeur du réacteur situé en amont de la zone catalytique a pour longueur (f) 800 mm. Un tube de réduction de passage (14) est inséré en périphérie du tube catalytique (10) pour réduire la section de passage du mélange éthanol+eau qui pénètre dans le réacteur. Le diamètre de cette section de passage annulaire (g) est de 2 mm.

Au niveau de la chambre (20) la grille catalytique a un diamètre (I) de 100 mm, la grille de distribution (25) dont la porosité est de 30% est disposée à une distance (m) de 40 mm de la plaque brise-jet (24). Le tube d'arrivée d'air (31) a un diamètre interne (n) de 10,4 mm. Le tube concentrique d'arrivée du gaz (22) a un diamètre interne (o) compris entre 6 et 8 mm et le tube injecteur (21) a un diamètre interne (p) de 17,1 mm. L'interne (23) est disposé à une distance (q) d'environ 40 mm au dessus de la sortie du tube injecteur (21). Le tronçon de matériau poreux (26) est un monolithe en cordiérite (400 cpsi).

Le fonctionnement du réacteur/échangeur a été simulé en prenant en compte l'avancement et la chaleur de réaction et les échanges thermiques dans le réacteur pour la géométrie telle que décrite ci-dessus. Les valeurs de températures obtenues au sein du réacteur sont résumées dans le tableau 2.

**Tableau 2 : Température en °C calculée le long du circuit des réactifs et le long du circuit des fumées**

| | Éthanol+eau | Gaz de synthèse | Fumées |
|---|---|---|---|
| Entrée réacteur | 238 | | |
| Entrée zone catalytique | 364 | 505 | |
| Sortie zone catalytiques | 750 | 750 | 1100 |
| Sortie réacteur | | 400 | 501 |

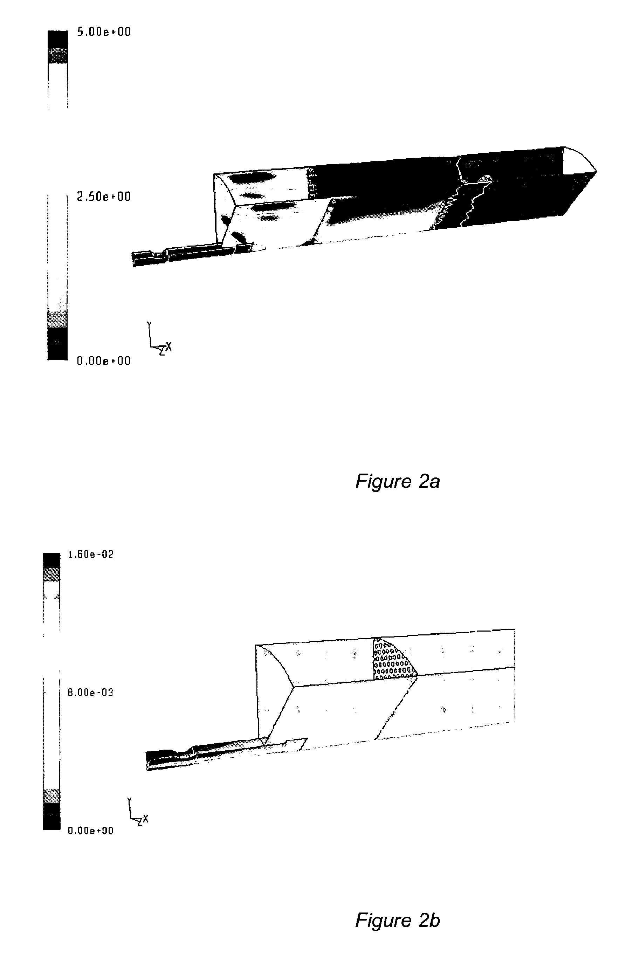

La géométrie du réacteur selon l'invention permet ainsi d'atteindre la température d'équilibre optimale pour la réaction de vaporéformage en sortie du lit catalytique en utilisant les fumées d'un brûleur catalytique. La section d'échangeur intégré en amont de la zone catalytique est efficace puisque la température de sortie du gaz de synthèse est abaissée à 400°C (plus de corrosion par "metal dusting" en aval du réacteur) et les réactifs sont préchauffés à une température supérieure à 350°C. La géométrie et les dimensions de la chambre de combustion du réacteur selon l'invention permettent un mélange efficace des réactifs en sortie du tube injecteur (21) comme le montre la cartographie de concentration de la figure 2b. De même la distribution de l'écoulement gaz combustible/air est homogène à l'amont de la grille catalytique comme le montre la cartographie des vitesses gaz présentée à la figure 2a.

Le dispositif selon l'invention présente donc les avantages suivants:
- les pertes thermiques sont minimisées car plusieurs fonctions sont incluses dans le même équipement sous pression: préchauffe des réactifs, réaction, refroidissement des réactifs, combustion pour l'apport de chaleur, refroidissement des fumées.
- les réactifs sont préchauffés efficacement dans la partie supérieure du tube catalytique grâce à la réduction de passage qui permet d'augmenter les coefficients d'échange.
- le gaz de synthèse cède ses calories avant de quitter le réacteur-échangeur à une température compatible avec la température design d'un équipement sous pression.
- la plage de corrosion la plus sévère (600-800°C) est confinée dans l'équipement puisque le gaz de synthèse sort à une température en-dessous de 400°C.
- un passage est gardé pour permettre le chargement du catalyseur; ce passage est conçu de manière à ne pas constituer une zone de by-pass lorsque le bouchon de chargement du catalyseur est refermé.
- la solution proposée peut également intégrer la vaporisation de la vapeur d'eau nécessaire à la réaction.

Il doit être évident pour l'homme du métier que la présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Enceinte dans laquelle s'effectue une réaction chimique en présence de catalyseur et de réactifs, comportant :
- au moins un tube catalytique (10) dans lequel est disposé un tube interne d'évacuation (12) du gaz produit, en relation avec l'extérieur, le catalyseur (13) étant disposé entre le tube interne d'évacuation (12) et la surface interne du tube catalytique (10),
- des moyens d'introduction des réactifs (15) situés dans la partie supérieure de l'enceinte (1),
- des moyens d'introduction du catalyseur (16) situés dans la partie supérieure de l'enceinte (1),
- des moyens de chauffage du tube catalytique (10) disposés dans la partie inférieure de l'enceinte (1),
et dans laquelle le tube catalytique (10) comporte dans sa partie supérieure au dessus du catalyseur (13) une réduction de la section de passage (17) des réactifs par des moyens favorisant l'échange de chaleur entre les réactifs et le gaz produit.

2. Enceinte selon la revendication 1 dans laquelle les moyens favorisant l'échange de chaleur entre les réactifs et le gaz produit sont constitués d'un tube de réduction de passage (14) disposé contre la surface interne du tube catalytique (10) de façon a laisser un passage (17) pour les réactifs entre le tube de réduction de passage (14) et le tube interne d'évacuation (12).

3. Enceinte selon la revendication 2 dans laquelle l'épaisseur du tube de réduction de passage (14) est définie de façon à ce que la surface de sa paroi interne soit disposée à une distance comprise entre 1 mm et 40 mm de la surface externe du tube interne d'évacuation (12).

4. Enceinte selon une des revendications 2 ou 3 dans laquelle le tube de réduction de passage (14) comporte un canal (18) reliant les moyens d'introduction du catalyseur (16) et la zone du tube catalytique (10) où est disposé le catalyseur (13).

5. Enceinte selon une des revendications 1 à 4 dans laquelle les moyens de chauffage sont constitués d'une chambre (20) de combustion comportant à sa base un tube injecteur (21) de l'air et d'un gaz inflammable, un interne (23) disposé dans le tube injecteur (21) au niveau de la jonction avec la chambre (20), un brise-jet (24) disposé dans la chambre (20) au dessus de l'interne (23), une grille de distribution (25) du mélange air/gaz disposée au dessus du brise-jet (24), un matériau poreux (26) disposé au dessus de la grille de distribution (25) et une deuxième grille (37) au dessus du matériau poreux pour initier la combustion.

6. Enceinte selon la revendication 5 dans laquelle la grille de distribution (25) a une porosité de 30%.

7. Enceinte selon une des revendications 6 ou 7 dans laquelle le matériau poreux est un monolithe en cordiérite de 400 cpsi.

8. Enceinte selon une des revendications 1 à 7 dans laquelle le tube catalytique (10) est disposé dans un tube supplémentaire (28), la distance entre la surface externe du tube catalytique (10) et le tube supplémentaire (28) est comprise entre 1 mm et 40 mm.

9. Enceinte selon une des revendications 1 à 8 dans laquelle un matériau (2) de type calorifuge est disposé entre le tube supplémentaire (28) et la paroi de l'enceinte (1).

10. Enceinte selon une des revendications 1 à 9 dont le diamètre est compris entre 50 mm et 10 m.

11. Procédé de vaporeformage mettant en oeuvre le dispositif selon une des revendications 1 à 10 en tant que réacteur-échangeur pour réaliser une réaction de vaporeformage.

12. Procédé selon la revendication 11 dans lequel le gaz de synthèse est évacué à une température inférieure à 600°C.

13. Procédé selon une des revendications 11 ou 12 dans lequel les réactifs sont préchauffés à une température supérieure à 350°C.
